(19) Europäisches Patentamt
European Patent Office
Office européen des brevets

(11) **EP 3 161 517 B1**

(12) **EUROPÄISCHE PATENTSCHRIFT**

(45) Veröffentlichungstag und Bekanntmachung des Hinweises auf die Patenterteilung:
**19.08.2020 Patentblatt 2020/34**

(21) Anmeldenummer: **15719661.9**

(22) Anmeldetag: **24.04.2015**

(51) Int Cl.:
*G01S 13/93* (2020.01)   *G01S 7/35* (2006.01)
*G01S 13/34* (2006.01)   *G01S 13/524* (2006.01)

(86) Internationale Anmeldenummer:
**PCT/EP2015/058893**

(87) Internationale Veröffentlichungsnummer:
**WO 2015/197229 (30.12.2015 Gazette 2015/52)**

(54) **VERFAHREN ZUR OBJEKTORTUNG MIT EINEM FMCW-RADAR**

METHOD FOR LOCATING AN OBJECT USING AN FMCW RADAR

PROCÉDÉ DE LOCALISATION D'OBJETS AU MOYEN D'UN RADAR FMCW

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2014 DE 102014212390**

(43) Veröffentlichungstag der Anmeldung:
**03.05.2017 Patentblatt 2017/18**

(73) Patentinhaber: **Robert Bosch GmbH**
**70442 Stuttgart (DE)**

(72) Erfinder: **SCHOOR, Michael**
**70195 Stuttgart (DE)**

(56) Entgegenhaltungen:
DE-A1-102009 000 468   DE-A1-102012 008 350
DE-A1-102012 212 888   DE-A1-102012 220 879
US-A1- 2005 285 773    US-A1- 2012 235 854

**Beschreibung**

Stand der Technik

Die Erfindung betrifft ein Verfahren zur Ortung von Objekten mit einem FMCW-Radar, bei dem:

- ein rampenförmig frequenzmoduliertes Radarsignal gesendet wird, dessen Modulationsmuster mehrere aufeinander folgende Rampen mit unterschiedlicher Steigung aufweist,
- empfangene Radarechos mit dem gesendeten Signal in ein Basisband herunter gemischt werden,
- das Basisbandsignal Rampe für Rampe aufgezeichnet und in ein jeweiliges Spektrum transformiert wird,
- für jeden im Spektrum aufgefundenen Signalpeak eine Rausch-Schätzung zur Unterscheidung zwischen Radarzielen und Rauschen oder Clutter vorgenommen wird,
- das Modulationsmuster mehrere unmittelbar aufeinander folgende Rampen mit gleicher Steigung aufweist,
- das Basisbandsignal für jede Schar der aufeinander folgenden Rampen mit gleicher Steigung in ein Spektrum in einem zweidimensionalen Frequenzraum transformiert wird, in dem eine erste Frequenzvariable $f_k$ einen Abtastindex k innerhalb jeder Rampe repräsentiert und eine zweite Frequenzvariable $f_j$ einen Rampenindex repräsentiert, und
- die Rausch-Schätzung in beiden Dimensionen des Frequenzraumes ausgeführt wird.

Weiterhin betrifft die Erfindung einen Radarsensor, insbesondere für Kraftfahrzeuge, der zur Durchführung dieses Verfahrens ausgebildet ist.

Ein Verfahren der oben genannten Art ist aus US 2012/235854 A1 bekannt.

Bei Kraftfahrzeugen werden FMCW-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Die Frequenz des Basisbandsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objekts bedingt ist. Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands /Geschwindigkeits-Diagramm (R-v-Diagramm) als Gerade darstellen. Um eindeutige Werte für den Abstand und die Relativgeschwindigkeit zu erhalten, wird bei einem gebräuchlichen Typ eines FMCW-Radars mit einander abwechselnden steigenden und fallenden Frequenzrampen gearbeitet. Im R-v-Diagramm erhält man dann für jede Rampe eine andere Gerade, und der Abstand und die Relativgeschwindigkeit des Objekts sind durch den Schnittpunkt dieser beiden Geraden gegeben.

Wenn jedoch mehrere Objekte gleichzeitig geortet werden, enthält das Frequenzspektrum des Basisbandsignals auf jeder Rampe mehrere Peaks, je einen für jedes Objekt, und bei einem Vergleich der Peaks auf verschiedenen Rampen ist nicht mehr eindeutig feststellbar, welcher Peak zu welchem Objekt gehört. Beispielsweise erhält man bei gleichzeitiger Ortung von zwei Objekten ein R-v-Diagramm mit vier einander schneidenden Geraden. Nur zwei der vier Schnittpunkte geben die Abstände und Relativgeschwindigkeiten der beiden Objekte an, während die beiden anderen Schnittpunkte sogenannte "Scheinziele" repräsentieren.

Um diese Mehrdeutigkeit zu beseitigen, wird zumeist noch mit mindestens einer dritten Frequenzrampe gearbeitet, die eine andere Steigung hat und eine weitere Schar von Geraden im R-v-Diagramm liefert. Die echten Objekte sind dann daran zu erkennen, dass alle drei Geraden durch denselben Punkt gehen.

Bei zunehmender Anzahl von gleichzeitig georteten Objekten steigt jedoch die Wahrscheinlichkeit, dass mehrere Geraden sich nur zufällig in nahezu demselben Punkt schneiden, stark an, wodurch auch der der Aufwand steigt, die Mehrdeutigkeiten aufzulösen. Oft werden weitere Frequenzrampen verwendet, um Mehrdeutigkeiten einfacher aufzulösen.

Es ist auch ein alternativer Ansatz zur Lösung dieses Problems vorgeschlagen worden (z. B. DE 10 2009 000 468 A1). Dabei wird mit einer Folge von identischen, verhältnismäßig kurzen Frequenzrampen, sogenannten "Rapid Chirps" gearbeitet, die im Verhältnis zu ihrer Dauer einen hohen Frequenzhub haben und deshalb so steil sind, dass im Basisbandsignal der abstandsabhängige Anteil dominiert, während der Doppleranteil nur eine kleine Korrektur darstellt. Diese Korrektur wird dadurch bestimmt, dass man die Phasenänderung des Basisbandsignals von Rampe zu Rampe verfolgt. Dabei wird der Umstand ausgenutzt, dass die Phase des Basisbandsignals relativ empfindlich auf die geringe Änderung des Objektsabstands reagiert, die aus der Relativbewegung des Objektes während des kurzen Zeitintervalls von einer Frequenzrampe zur nächsten resultiert.

Da die Phasenänderung jedoch eine periodische Funktion der Relativgeschwindigkeit ist, lässt sich die Relativgeschwindigkeit nur dann eindeutig bestimmen, wenn sie so klein ist, dass die Phasenänderung weniger als eine halbe Periode (also weniger als $\pi$) beträgt.

Bei einem Einsatz des FMCW-Radars in einem Kraftfahrzeug können die Relativgeschwindigkeiten so groß sein, dass man, um dennoch eindeutige Ergebnisse zu erhalten, die Dauer und damit die Wiederholfrequenz der Chirps sehr kurz wählen muss. Das erfordert nicht nur mehr Rechenleistung, sondern kann wegen der entsprechend kürzeren "Beobachtungsdauer" auch eine größere Unschärfe bei der Abstandsmessung mit sich bringen, so dass weitere Maßnahmen erforderlich sind, damit man hinreichend genaue Abstandswerte erhält.

Generell besteht bei der Radarortung das Problem, dass die empfangenen Radarsignale mehr oder weniger verrauscht sind und darüber hinaus auch Radarechos von "uninteressanten" Objekten enthalten, beispielsweise von Leitplankenpfosten, Fahrbahnunebenheiten, Regentropfen und dergleichen. Diese unerwünschten Radarechos, der sogenannte "Clutter", haben zwar zumeist eine kleinere Amplitude als die eigentlich interessierenden Radarziele, können aber dennoch die Identifizierung der echten Radarziele erschweren, insbesondere wenn sich im Ortungsbereich mehrere Radarziele mit annähernd gleichen Abständen und/oder Relativgeschwindigkeiten befinden.

Offenbarung der Erfindung

Aufgabe der Erfindung ist es deshalb, ein Verfahren anzugeben, das es erlaubt, die störenden Einflüsse von Rauschen und Clutter weiter zu unterdrücken.

Diese Aufgabe wird erfindungsgemäß dadurch gelöst, dass die Bestimmung der Abstände R und Relativgeschwindigkeiten v durch Vergleich der Frequenzlagen der einander entsprechenden Signalpeaks in den für verschiedene Rampensteigungen erhaltenen Spektren allein auf der Basis der ersten Frequenzvariablen $f_k$ erfolgt.

Das Modulationsmuster bei dem erfindungsgemäßen Verfahren ähnelt insofern dem oben erwähnten Rapid Chirps Verfahren, als auch hier mehrere Rampen mit gleicher Steigung unmittelbar aufeinander folgen. Eine weitere Übereinstimmung besteht darin, dass auch bei dem erfindungsgemäßen Verfahren die Phasenänderung des Basisbandsignals von Rampe zu Rampe ausgewertet wird. Mathematisch bedeutet dies, dass eine zweidimensionale Fourier-Transformation ausgeführt wird. In der ersten Dimension wird das Basisbandsignal für einzelne Rampen als Funktion der Zeit betrachtet und einer (eindimensionalen) Fourier-Transformation unterzogen. In der zweiten Dimension wirkt die Transformation auf die Gesamtheit der empfangenen Daten für die komplette Schar von aufeinander folgenden Rampen gleicher Steigung, und die unabhängige Zeitvariable wird durch den Rampenindex gebildet, also die laufende Nummer der zeitlich aufeinander folgenden Rampen. Zu jedem Frequenzwert $f_k$ in der ersten Dimension erhält man so einen zweiten Frequenzwert $f_j$ in der zweiten Dimension, der angibt, mit welcher Frequenz diese Frequenzkomponente oszilliert, wenn man nacheinander die einzelnen Rampen durchläuft. Diese zweite Frequenzkomponente $f_j$ repräsentiert somit die Phasenänderungen des Basisbandsignals von Rampe zu Rampe, die durch die Relativbewegung des Radarziels verursacht wird.

Erfindungsgemäß wird diese Information jedoch nicht unmittelbar zur Bestimmung der Relativgeschwindigkeit genutzt, sondern die Bestimmung der Relativgeschwindigkeit und des Abstands erfolgt wie bei einem "herkömmlichen" FMCW-Radar durch Analyse der Geraden im R-v-Diagramm, die man für Rampen mit unterschiedlicher Steigung erhält. Die (den Chirps vergleichbaren) aufeinander folgenden Rampen mit gleicher Steigung brauchen deshalb nicht das oben erwähnte Eindeutigkeitskriterium zu erfüllen, so dass im Vergleich zu einem Rapid Chirps Verfahren die Rampensteigungen wesentlich kleiner und die Rampendauern wesentlich größer gewählt werden können. Das führt zu einer beträchtlichen Kostenersparnis.

Das zweidimensionale Spektrum wird bei dem erfindungsgemäßen Verfahren in erster Linie dazu genutzt, die Rausch-Schätzung robuster zu machen und so die störenden Einflüsse von Rauschen und Clutter zu unterdrücken. Vorteilhaft ist dabei, dass in einem zweidimensionalen Spektrum jeder Peak nicht nur von zwei eindimensionalen Intervallen eingerahmt ist, in denen das empfangene Signal nur Rauschen und Clutter enthält, sondern vielmehr von einem wesentlichen größeren ringförmigen Gebiet umgeben ist, so dass Rauschen und Clutter über ein wesentlich größeres Integrationsgebiet gemittelt werden können.

Wenn zwei Peaks, die zu echten Radarzielen gehören, in dem zweidimensionalen Spektrum sehr nahe beieinander liegen, so liefert der zweite Peak nur einen verhältnismäßig kleinen Beitrag zur Rauschumgebung des ersten Peaks, und umgekehrt, so dass die Gefahr, dass sich diese Peaks gegenseitig maskieren, wesentlich geringer ist.

Ein weiterer Vorteil des erfindungsgemäßen Verfahrens besteht darin, dass nahe beieinander liegende Peaks in dem zweidimensionalen Spektrum wesentlich einfacher und sicherer voneinander getrennt werden können als in einem eindimensionalen Spektrum.

Da die Bestimmung der Abstände und Relativgeschwindigkeiten der echten Radarziele anhand der Geraden im R-v-Raum erfolgt, ist bei dem erfindungsgemäßen Verfahren grundsätzlich auch eine Matching Prozedur erforderlich, mit der entschieden wird, welche der in verschiedenen Spektren (für unterschiedliche Rampensteigungen) erhaltenen Peaks zu demselben Ziel gehören. Die zweidimensionalen Spektren können jedoch dazu beitragen, die Ergebnisse dieses Matching auf Plausibilität zu prüfen und/oder unplausible Matching-Ergebnisse von vornherein auszugrenzen, so dass auch die Genauigkeit und Verlässlichkeit des Matching verbessert und/oder der dafür erforderliche Rechenaufwand reduziert werden kann.

Vorteilhafte Ausgestaltungen der Erfindung sind in den Unteransprüchen angegeben.

Im folgenden wird ein Ausführungsbeispiel anhand der Zeichnung näher erläutert. Es zeigen:

Fig. 1     ein Blockdiagramm eines FMCW-Radarsystems;

Fig. 2     ein Beispiel eines Frequenzmodulationsschemas;

Fig. 3     eine Folge von Rampen mit gleicher Steigung in dem Modulationsschema nach Fig. 2;

Fig. 4     eine Folge von Basisband-Zeitsignalen für die in Fig. 3 gezeigten Rampen;

Fig. 5     einen Längsschnitt der Zeitsignale nach Fig. 4;

Fig. 6     Ein Beispiel eines zweidimensionalen Spektrums der Zeitsignale in Fig. 4 und 5 sowie ein zugehöriges eindimensionales Teilspektrum;

Fig. 7     ein Diagramm zur Illustration einer zweidimensionalen Rausch-Schätzung;

Fig. 8     eine Dämpfungskurve zu einer Fensterfunktion, die auf den Längsschnitt nach Fig. 5 angewandt wird;

Fig. 9     ein eindimensionales Spektrum, analog zu dem Teilspektrum in Fig. 6, mit Schwellenwerten für eine Rausch-Schätzung nach dem erfindungsgemäßen Verfahren; und

Fig. 10    ein R-v-Diagramm.

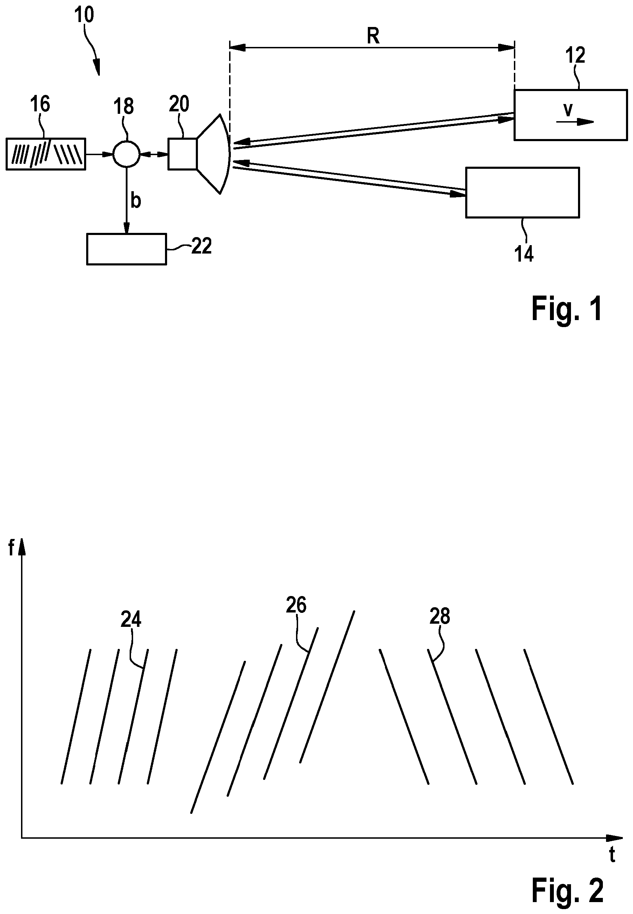

In Fig. 1 ist als vereinfachtes Blockdiagramm ein FMCW-Radarsensor 10 dargestellt, der beispielsweise vorn in einem Kraftfahrzeug eingebaut ist und dazu dient, Abstände R und Relativgeschwindigkeiten v von Objekten 12, 14 zu messen, beispielsweise von vorausfahrenden Fahrzeugen. Der Radarsensor 10 weist einen spannungsgesteuerten Oszillator 16 auf, der ein frequenzmoduliertes Sendesignal über einen Mischer 18 an eine Sende- und Empfangseinrichtung 20 liefert, von der das Signal in Richtung auf die Objekte 12, 14 ausgesandt wird. Das an den Objekten reflektierte Signal wird von der Sende- und Empfangseinrichtung 20 empfangen und im Mischer 18 mit einem Anteil des Sendesignals gemischt. Auf diese Weise erhält man ein Basisbandsignal b, das in einer elektronischen Auswerte- und Steuereinrichtung 22 weiter ausgewertet wird.

Fig. 2 zeigt ein Beispiel für ein Modulationsschema des vom Oszillator 16 gelieferten Sendesignals. Die Frequenz f des Sendesignals ist hier als Funktion der Zeit t aufgetragen. Die Frequenz wird in der Form von aufeinanderfolgenden Rampen 24, 26, 28 moduliert. Im gezeigten Beispiel folgt auf vier identische Rampen 24, die in gleichen zeitlichen Abständen aufeinander folgen, eine Schar von vier Rampen 26, die zwar die gleiche Steigung haben, deren Mittenfrequenz jedoch von Rampe zu Rampe etwas ansteigt. Die zeitlichen Abstände sind etwas größer als bei den Rampen 24. An die Rampen 26 schließt sich eine weitere Schar von vier identischen Rampen 28 mit negativer Steigung und noch etwas größeren Abständen von Rampe zu Rampe an. Dieses Muster ist lediglich als illustratives Beispiel zu verstehen und kann auf vielfältige Weise abgewandelt werden. Wesentlich ist nur, dass das Modulationsmuster mindestens eine Schar von (mindestens zwei) Rampen mit gleicher Steigung enthält, wie beispielsweise die Rampen 24, und außerdem mindestens eine Rampe mit anderer Steigung, vorzugsweise auch mit entgegengesetztem Vorzeichen der Steigung wie beispielsweise die Rampen 28. Die zu derselben Schar gehörenden Rampen müssen dabei nicht zwingend unmittelbar aufeinander folgen. Vielmehr können die Scharen der Rampen 24, 26 und 28 auch ineinander verschachtelt sein.

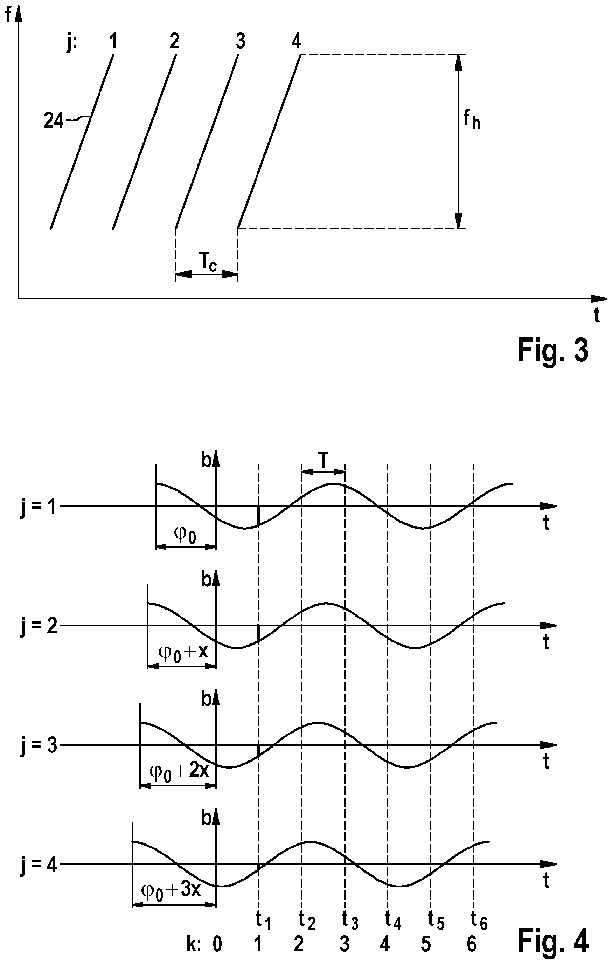

Die Rampen 24 sind in Fig. 3 noch einmal gesondert dargestellt und fortlaufend mit einem Index j numeriert. Die mittlere Frequenz des Sendesignals liegt in der Größenordnung von 76 GHz, und der Frequenzhub $f_h$, um den sich die Frequenz im Verlauf jeder Rampe ändert, liegt in der Größenordnung von einigen MHz. Der zeitliche Abstand $T_C$, in dem die Rampen 24 aufeinanderfolgen, liegt in der Größenordnung von einigen Millisekunden und ist damit um einen Faktor von 10 - 100 größer als bei einem typischen Rapid Chirp Verfahren. Da im gezeigten Beispiel die Rampen 24 ohne Pause aufeinanderfolgen, gibt $T_C$ zugleich die Rampendauer an.

Die Frequenz des Basisbandsignals b entspricht dem Frequenzunterschied zwischen dem Sendesignal, das vom Mischer 18 an die Sende- und Empfangseinrichtung 20 weitergeleitet wird, und dem Signal, das nach Reflexion an den Objekten 12, 14 von der Sende- und Empfangseinrichtung 20 empfangen wurde und wieder am Mischer 18 eintrifft. Dieser Frequenzunterschied setzt sich additiv zusammen aus einem abstandsabhängigen Anteil $f_R$ und einem geschwindigkeitsabhängigen Anteil $f_v$. Der abstandsabhängige Anteil $f_R$ resultiert aus der Frequenzmodulation und ist in dem hier gezeigten Beispiel gegeben durch:

$$f_R = 2\ R\ f_h\ /\ c\ T_C \tag{1}$$

wobei c die Lichtgeschwindigkeit ist. Der geschwindigkeitsabhängige Anteil resultiert aus dem Dopplereffekt und ist näherungsweise gegeben durch:

$$f_v = 2\ f\ v\ /\ c. \tag{2}$$

In Fig. 4 sind, unter der Annahme, dass nur ein einzelnes Objekt geortet wird, die Basisbandsignale b für die ersten vier Rampen j = 1 bis j = 4 als Funktionen der Zeit t (Zeitsignale) dargestellt. In der Auswerte- und Steuereinrichtung 22 wird das als analoges Signal vom Mischer 18 gelieferte Zeitsignal periodisch, zu Abtastzeitpunkten t1, t2, ..., abgetastet, digitalisiert, mit einer geeigneten Fensterfunktion gefiltert, und gespeichert. Die Abtastzeitpunkte sind mit den Modulationsrampen des Sendesignals synchronisiert und innerhalb jeder Rampe mit dem Index k numeriert. Die Abtastperiode, also der zeitliche Abstand zwischen den einzelnen Abtastzeitpunkten, ist mit T bezeichnet.

Durch schnelle Fouriertransformation (FFT) lässt sich das Zeitsignal für jede Rampe in ein Spektrum umwandeln, das die (komplexe) Amplitude des Basisbandsignals als Funktion der Frequenz $f_k$ angibt.

Unter der Annahme, dass nur ein einzelnes Objekt vorhanden ist, weist das auf einer einzelnen Rampe aufgenommene Spektrum einen scharfen Peak bei der Frequenz $f_k = f_R + f_v$ auf. Wegen des geringen zeitlichen Abstands $T_C$ der Rampen bleiben die Frequenzen $f_R + f_v$ praktisch unverändert.

Wenn jedoch die Relativgeschwindigkeit des Objektes nicht gleich null ist, so führt die geringfügige Abstandsänderung des Objektes, die innerhalb der Rampendauer $T_C$ eintritt, zu einer Phasenverschiebung des Basisbandsignals, wie in Fig. 4 dargestellt ist. Von Rampe zu Rampe nimmt die Phase jeweils um einen bestimmten Betrag x zu. Wenn mit $\varphi_0$ die Phase auf der ersten Rampe (j = 1) bezeichnet ist, so hat die Phase auf der zweiten Rampe (j = 2) den Wert $\varphi_0 + x$, auf der dritten Rampe (j = 3) den Wert $\varphi_0 + 2x$ und so weiter.

Allgemein lässt sich das Basisbandsignal b als Funktion des Abtastindex k und des Rampenindex j wie folgt beschreiben:

$$s(k,j) = Re(exp(\ i(\varphi_0\ +\ 2\ \pi\ (f_R + f_v)\ k\ T\ +\ 2\pi\ f_v\ j\ T_C))) \tag{3}$$

Der Term $(f_R + f_v)\ k\ T$ repräsentiert die Laufzeit- und Dopplereffekte innerhalb einer einzelnen Rampe. Der Term $f_v\ j\ T_C$ repräsentiert den Effekt der leichten Änderung des Objektabstands von Rampe zu Rampe und ist nur von dem geschwindigkeitsabhängigen Anteil $f_v$ (der Dopplerfrequenz) abhängig. Der Wert $\varphi_0$ ist ein Phasen-Offset, der gegeben ist durch

$$\varphi_0\ =\ 4\pi\ R\ f_m\ /\ c \tag{4}$$

wobei $f_m$ die Mittenfrequenz der Frequenzrampe ist.

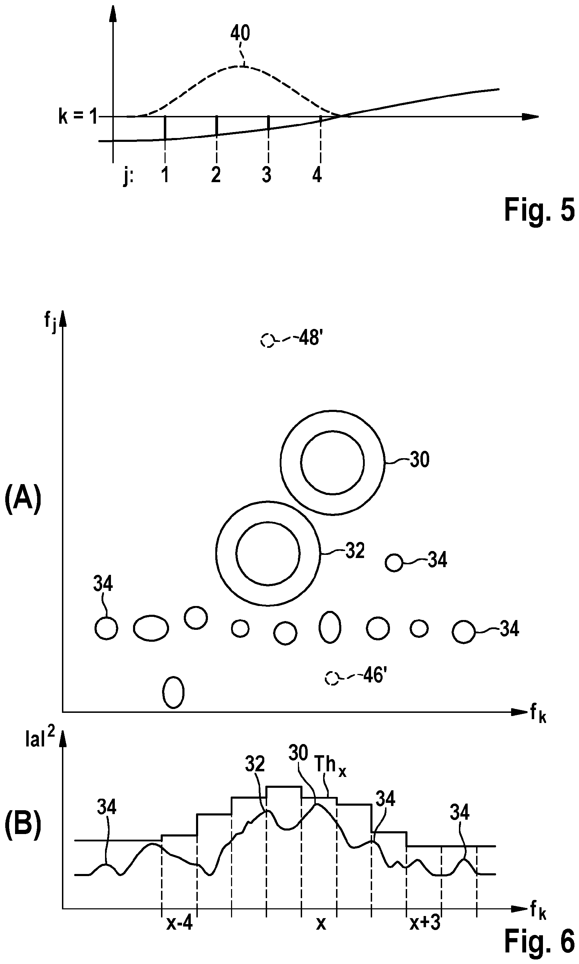

Wenn man, wie in Fig. 4, eine Fouriertransformation jeweils nur innerhalb einer einzelnen Rampe ausführt (über den Index k bei festem j), so liefert der Term $f_v\ j\ T_C$ in Gleichung (3) jeweils nur einen Beitrag x, 2x, ... zur Phase. Man kann jedoch auch eine Fouriertransformation über einen "Längsschnitt" der Zeitsignale ausführen, indem man den Abtastindex k festhält und die schnelle Fouriertransformation über den laufenden Rampenindex j ausführt. In Fig. 4 und 5 ist dies symbolisch für den Abtastindex k = 1 dargestellt. In Fig. 4 sind die Funktionswerte zum Abtastzeitpunkt t1 als dicke Balken dargestellt. Die gleichen Balken sind auch in Fig. 5 gezeigt. Sie sind hier jedoch gegen den Rampenindex j aufgetragen. Aufgrund des Phasenversatzes von Rampe zu Rampe erhält man wiederum eine periodische Funktion, die man einer Fouriertransformation unterziehen kann.

Diese Fouriertransformationen, die man für jedes k ausführen kann, liefern bei einem einzelnen Objekt einen Peak bei der Dopplerfrequenz $f_v$.

Sofern, wie in dem hier betrachteten Beispiel, der Zeitabstand zwischen den Rampen und auch der Frequenzunterschied von Rampe zu Rampe identisch ist, kann man ein besonders elegantes Auswertungsverfahren anwenden, bei dem die oben beschriebenen Fouriertransformationen zu einer sogenannten zweidimensionalen Fouriertransformation zusammengefasst werden. Dabei werden die auf den aufeinanderfolgenden Rampen 24 gewonnenen Zeitsignale in einen zweidimensionalen Frequenzraum transformiert, dessen Koordinaten Frequenzen $f_k$ und $f_j$ sind, wie in Fig. 6 (A) gezeigt ist. Die Frequenz $f_k$ ist die Frequenzvariable in einer Reihe von ersten (eindimensionalen) Fouriertransformationen, bei den man jeweils den Rampenindex j fest hält und über k transformiert, und die Frequenz $f_j$ ist die Frequenzvariable von zweiten Fouriertransformationen, bei denen man jeweils $f_k$ fest hält und über j transformiert. Gemäß Gleichung (3) entspricht $f_j$ der Dopplerfrequenz $f_v$ und $f_k$ der Summe $f_R + f_v$.

Wenn für die Dopplerfrequenz $f_v$ die Eindeutigkeitsbedingung

$$| f_v | < 1 / 2T_C \qquad\qquad (5)$$

nach dem Abtasttheorem von Shannon erfüllt wäre, könnte man in diesem zweidimensionalen Frequenzraum die Abstände und Relativgeschwindigkeiten der Radarziele unmittelbar ablesen. Bei dem hier beschriebenen Verfahren sind jedoch die zeitlichen Abstände $T_C$ der Rampen groß gewählt, dass man nicht voraussetzen kann, dass die Eindeutigkeitsbedingung immer erfüllt ist. Die zweidimensionale Fouriertransformation dient hier vielmehr dazu, die störenden Einflüssen von Rauschen und Clutter zu unterdrücken, wie nachstehend anhand der Figuren 5 bis 9 erläutert werden soll.

In Fig. 6(A) sind in dem zweidimensionalen Frequenzraum zwei Peaks 30, 32 zweier (echter) Radarziele als konzentrische Kreise dargestellt, die die "Höhenlinien" dieser Peaks symbolisieren sollen. Weiterhin sind kleinere Kreise und Ellipsen eingezeichnet, die den sogenannten Clutter 34 symbolisieren sollen, also Signale von störenden Objekten wie Leitplankenpfosten, Bodenunebenheiten und dergleichen. Bei der Mehrzahl dieser Clutter-Objekte wird es sich um stehende Objekte handeln, also um Objekte, deren Relativgeschwindigkeit der Eigengeschwindigkeit des mit dem Radarsensor ausgerüsteten Fahrzeugs entspricht. Demzufolge haben diese Peaks die gleiche (negative) Dopplerfrequenz, und sie liegen in Fig. 6(A) auf einer waagerechten Geraden mit konstantem $f_j$.

Fig. 6(B) zeigt für die gleiche Situation eines der Spektren, die man bei der ersten Fourier-Transformation über eine einzelne der Rampen 24 erhält. Die beiden Peaks 30 und 32 sind hier beinahe zu einem einzigen Peak verschmolzen und heben sich weniger deutlich vom Rauschuntergrund und vom Clutter 34 ab.

Es sind verschiedene Verfahren bekannt, die es erlauben, in ein- und zweidimensionalen Spektren zwischen den zu echten Radarzielen gehörenden (und deshalb im allgemeinen höheren) Peaks 30, 32 einerseits und dem Clutter 34 und dem Rauschuntergrund andererseits zu unterscheiden. Eine gängige Klasse solcher Verfahren sind sogenannte CFAR-Verfahren (Constant False Alarm Rate), bei denen ein Peak als echtes Radarziel klassifiziert wird, wenn seine Höhe über einem bestimmten Schwellenwert liegt, und bei dem der Schwellenwert in Abhängigkeit von der Höhe des Untergrundsignals variiert wird.

Für den ein eindimensionalen Fall ist ein solches Verfahren in Fig. 6(B) dargestellt. Der Frequenzraum (Frequenzen $f_k$) wird in gleich große Zellen unterteilt, und um den Schwellenwert $Th_x$ für eine einzelne Zelle x zu bestimmen (x ist eine laufende Nummer der Zellen), wird über den Frequenzraum ein Fenster gelegt, das in der Mitte die zu untersuchende Zelle x sowie eine bestimmte Anzahl von Nachbarzellen enthält, beispielsweise die Zellen von x - 4 bis x + 4. Für jede Zelle innerhalb des Fensters wir dann die Signalleistung bestimmt, also das Integral über das Betragsquadrat $|a|^2$ der komplexen Amplitude. Der Schwellenwert $Th_x$ ist dann eine bestimmte statistische Funktion der Leistungen in den Nachbarzellen, hier also den Zellen x - 4 bis x -1 und x + 1 bis x + 4.

Im einfachsten Fall ist die statistische Funktion einfach der Mittelwert bei gleicher Gewichtung aller Nachbarzellen. Wenn das Rauschen und der Clutter gleichmäßig verteilt sind und nur ein einziges echtes Ziel vorhanden ist, so erhält man für den gesamten Frequenzraum einen einheitlichen Schwellenwert, und wenn der Peak oberhalb dieses Schwellenwertes liegt, wird er als echtes Radarziel gewertet. Wenn jedoch, wie in dem in Fig. 6(B) gezeigten Beispiel zwei Peaks 30, 32 nahe beieinander liegen, so führt, wenn der Schwellenwert $Th_x$ für die Zelle x (Peak 30) bestimmt wird, der benachbarte Peak 32 zu einer

Anhebung der mittleren Leistung und damit zu einer Anhebung des Schwellenwertes $Th_x$. Unter Umständen wird dabei der Schwellenwert so weit angehoben, dass der Peak 30 den Schwellenwert nicht mehr überschreitet, mit anderen Worten, der Peak 30 wird durch den benachbarten Peak 32 maskiert. Umgekehrt kann auch er Peak 32 durch den Peak 30 maskiert werden, wie in Fig. 6(B) als Beispiel gezeigt ist.

Dieses Problem der Maskierung lässt sich in gewissen Grenzen dadurch mildern, dass man in dem CFAR-Verfahren geeignetere statistische Funktionen benutzt. Bevorzugt sind so genannte OS-CFAR-Verfahren (OS für Ordered Statistics), bei denen die Nachbarzellen nach Höhe des Signalpegels geordnet werden und dann der Schwellenwert in Abhängigkeit von der Höhe des Pegels bei einer bestimmten Ordnungszahl bestimmt wird, beispielsweise in Abhängigkeit vom Median.

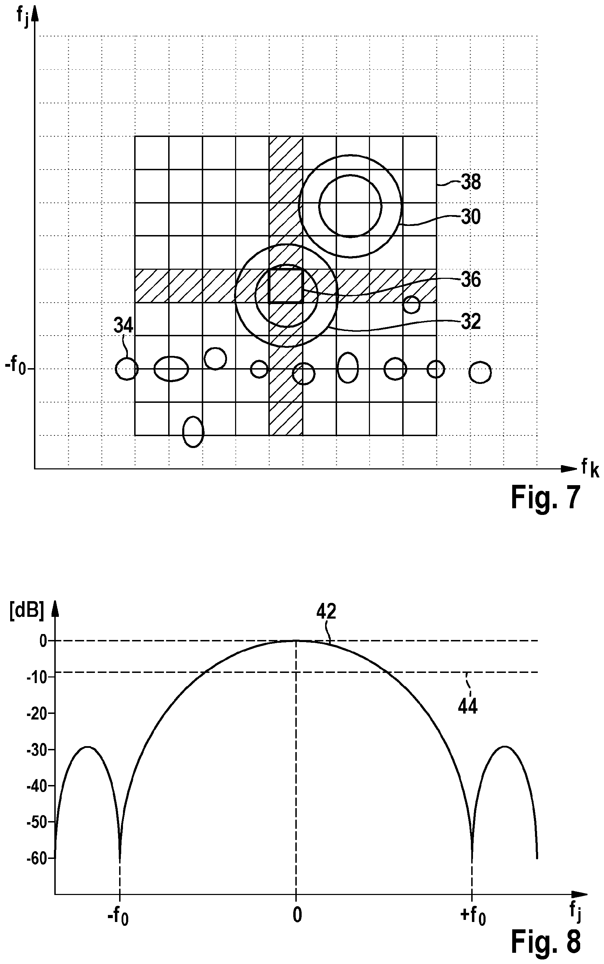

In Fig. 7 illustriert die Verallgemeinerung solcher CFAR-Verfahren auf den zweidimensionalen Frequenzraum. Als Beispiel ist hier die Bestimmung des Schwellenwertes für eine Zelle 36 gezeigt, die annähernd am Scheitel des Peaks 32 liegt. Um diese Zelle 36 herum wird ein Fenster 38 gelegt, das im gezeigten Beispiel aus 7 x 7 Zellen besteht. Für die Bestimmung des Schwellenwertes für die Zelle 36 können dann beispielsweise die Signalpegel in allen 48 Zellen des Fensters 38 (mit Ausnahme der Zelle 36) ausgewertet werden. In einer anderen Ausführungsform werden nur diejenigen Zellen ausgewertet, die in Fig. 7 schraffiert dargestellt sind, d.h. die unmittelbare und mittelbaren Nachbarn nur in den Koordinatenrichtungen $f_k$ und $f_j$.

In Fig. 7 ist unmittelbar einsichtig, dass, welche statistische Funktion auch immer zur Bestimmung des Schwellenwertes für die Zelle 36 gewählt wird, das statistische Gewicht des Clutters 34 und vor allem auch des Nachbarpeaks 30 deutlich kleiner sein wird als in dem eindimensionalen Fall in Fig. 6(B). Dementsprechend heben sich die Peaks 30 und 32 deutlicher vom Clutter ab, und das Problem der gegenseitigen Maskierung wird deutlich gemildert.

Ein weiterer Effekt, der zu einer Unterdrückung des Clutters führt, hängt mit der sogenannten "Fensterung" zusammen der die in Fig. 4 und 5 gezeigten Zeitsignale vor der Fourier-Transformation unterzogen werden. Wenn das Zeitsignal ein reines Sinus-Signal mit einer bestimmten Frequenz ist und die Rampendauer, also die Zeit, über die das Zeitsignal aufgezeichnet wird, unendlich lang wäre, so würde man einen idealen, unendlich scharfen Peak bei der betreffenden Frequenz erhalten. In der Praxis führt jedoch die endliche Rampendauer dazu, dass dieser Peak verbreitert wird und dass im Spektrum Nebenmaxima beiderseits des Hauptmaximums auftreten. Dieser Effekt lässt sich nicht völlig unterdrücken, doch kann die Form der Nebenmaxima dadurch beeinflusst werden, dass man das Zeitsignal mit einer geeigneten Fensterfunktion filtert, beispielsweise multipliziert.

Dasselbe gilt für den zweiten Transformationsschritt, in dem über den Rampenindex j transformiert wird. Für diesen Fall ist in Fig. 5 ein Beispiel einer Fensterfunktion 40 eingezeichnet, die dazu führt, dass die Spektren mit den Rampenindizes 2 und 3 stärker gewichtet werden als die Spektren mit den Indizes 1 und 4.

In Fig. 8 ist für eine spezielle Fensterfunktion 40 (Chebyshev 30dB) die zugehörige Dämpfungsfunktion 42 gezeigt, die angibt, wie durch dieses Fenster die Form des bei der zweiten Fourier-Transformation (Frequenzvariable $f_j$) erhaltene Spektrum modifiziert wird. Bei dieser Dämpfungsfunktion 42 handelt es sich um die Fourier-Transformierte der Fensterfunktion 40. Man erkennt, dass Frequenzanteile beiderseits der Frequenz $f_j = 0$ (Dopplerfrequenz 0) unterdrückt werden, bis bei einer bestimmten Frequenz $\pm f_0$ ein Minimum erreicht wird, jenseits dessen sich eine Nebenkeule anschließt. Der Mittelwert der Dämpfungsfunktion 42 ist in Fig. 8 als eine waagerechte Linie 44 eingezeichnet und liegt bei einer Dämpfung von 8,5 dB.

Wenn man annimmt, dass die Relativgeschwindigkeiten der Clutter-Objekte statistisch gleich verteilt sind, ergäbe sich folglich im statistischen Mittel eine Dämpfung des Clutters um 8,5 dB. Wenn man berücksichtigt, dass die meisten Clutter-Objekte stehende Objekte sind und demgemäß eine von null verschiedene negative Dopplerfrequenz entsprechend der Eigengeschwindigkeit des Fahrzeugs haben, ergibt sich in der Praxis sogar noch eine stärkere mittlere Unterdrückung des Clutters. Wahlweise kann dieser Effekt noch dadurch optimiert werden, dass man die Fensterfunktion 40 in Abhängigkeit von der jeweiligen Eigengeschwindigkeit des Fahrzeugs so variiert, dass das Minimum bei -$f_0$ gerade der zu dieser Eigengeschwindigkeit gehörenden Dopplerfrequenz entspricht (siehe Fig. 7). Die ruhenden Clutter-Objekte würden dann gewissermaßen in diesem Minimum "verschwinden".

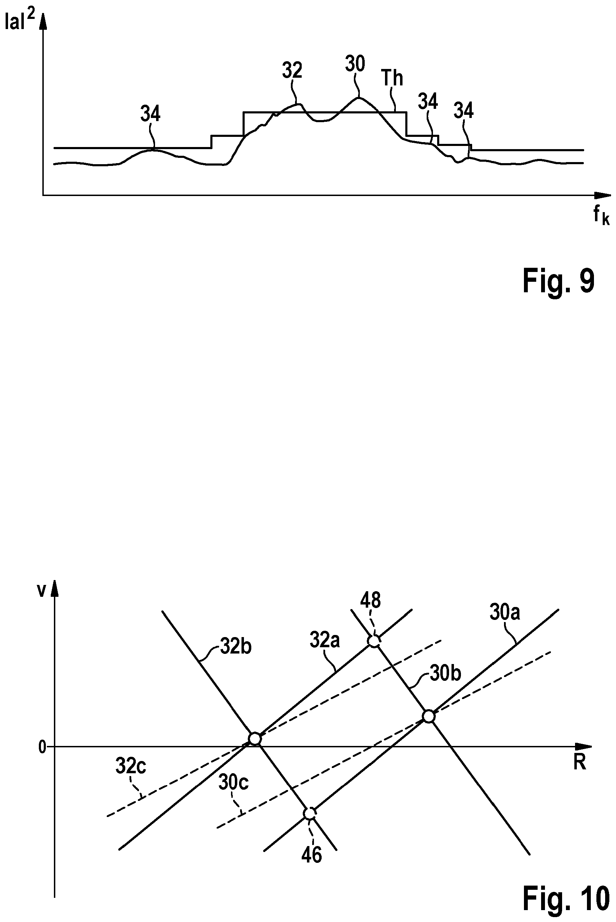

Das Resultat dieser Effekte, die zu einer Unterdrückung des Clutter beitragen, ist in Fig. 9 illustriert, die ein eindimensionales Spektrum mit der Frequenzvariablen $f_k$ zeigt. Anders als in Fig. 6(B) ist hier jedoch nicht das Spektrum gezeigt, das tatsächlich auf einer einzelnen Rampe 24 erhalten wurde, sondern ein fiktives Spektrum, das man erhält, indem man in dem in Fig. 6(A) gezeigten zweidimensionalen Spektrum für jeden Frequenzwert $f_k$ über $f_j$ integriert. Aufgrund der durch die Fensterung erreichten Dämpfung sind in Fig. 9 die Peaks für den Clutter 34 deutlich schwächer ausgeprägt als in Fig. 6(B). Die treppenförmige Kurve Th in Fig. 9 zeigt die Schwellenwerte, die durch das zweidimensionale CFAR-Verfahren gemäß Fig. 7 erhalten wurden. Im Bereich der Peaks 30 und 32 ist der Schwellenwert im Vergleich zu Fig. 6(B) deutlich abgesenkt, so dass sich die Peaks 30 und 32 nun über den Schwellenwert erheben und nicht mehr maskiert werden. Auf diese Weise wird bei unveränderter "false alarm rate" die Erkennung echter Radarziele deutlich verbessert.

Darüber hinaus erlaubt es die Analyse des zweidimensionalen Spektrums in Fig. 7, nahe beieinander liegende Peaks 30, 32 deutlicher und sicherer voneinander zu trennen.

In einer vorteilhaften Ausführungsform wird das oben beschriebene Verfahren für jede der übrigen Scharen von Rampen 26 und 28 in Fig. 2 wiederholt, so dass auch bei der Auswertung dieser Scharen von Rampen eine bessere Unterdrückung des Clutters und eine schärfere Zieltrennung erreicht wird. Die Bestimmung der Relativgeschwindigkeiten und Abstände der georteten Ziele erfolgt dann in bekannter Weise durch Matching der auf den verschiedenen Scharen von Rampen 24, 26, 28 erhaltenen Peaks im R-v-Raum, wie in Fig. 10 gezeigt ist.

Der Peak 30 in Fig. 7 liegt bei einer bestimmten Frequenz $f_k$, die der Summe aus dem abstandsabhängigen Frequenzanteil $f_R$ und dem geschwindigkeitsabhängigen Frequenzanteil $f_v$ entspricht. Der für den Peak 30 erhaltene Frequenzwert $f_k$ kennzeichnet somit eine bestimmte Beziehung zwischen dem Abstand R und der Relativgeschwindigkeit v des betreffenden Radarziels. Diese Beziehung wird in Fig. 10 durch eine Gerade 30a repräsentiert. Entsprechend erhält man für den Peak 32 einer Gerade 32a. Die Steigung dieser Geraden 30a und 32a ist nur von der Steigung der Rampe 24 abhängig. Folglich sind die beiden Geraden parallel.

Entsprechend liefert die Auswertung der Schar der fallenden Rampen 28 (Fig. 2) für dieselben Radarziele zwei fallende Geraden 30b und 32b in Fig. 10. Die Werte für den Abstand R und die Relativgeschwindigkeit v der beiden georteten Ziele müssen in Fig. 10 auf den Schnittpunkten der vier Geraden 30a, 32a, 30b und 32b liegen. Allerdings ist nicht ohne weiteres klar, welche der insgesamt vier Schnittpunkte die beiden echten Radarziele repräsentieren. Zur Auflösung dieser Mehrdeutigkeit ist es bisher üblich, noch eine weitere Schar von Rampen 26 mit anderer Steigung auszuwerten. Diese Rampen liefern dann ein weiteres Paar von Geraden 30c, 32c, die in Fig. 10 gestrichelt eingezeichnet sind. Nur für die echten Radarziele schneiden sich jeweils drei Geraden 30a, 30b und 30c bzw. 32a, 32b und 32c in demselben Punkt, der dann die Relativgeschwindigkeit und den Abstand des betreffenden Objekts angibt.

Mit zunehmender Anzahl der gleichzeitig georteten Ziele wird das oben skizzierte Matching-Verfahren jedoch zunehmend komplexer und fehleranfälliger.

Die Erfindung bietet jedoch die vorteilhafte Möglichkeit, das Matching-Verfahren durch zusätzliche Plausibilitätsprüfungen zu vereinfachen und robuster zu machen. Zum Beispiel repräsentiert der Schnittpunkt zwischen den Geraden 30a und 32b in Fig. 10 ein Scheinziel 46, dem kein echtes Radarziel entspricht. Dieses Scheinziel 46 hat jedoch einen bestimmten Abstand R und eine bestimmte Relativgeschwindigkeit v, so dass sich diesem Scheinziel auch ein bestimmter Ort 46' im zweidimensionalen Frequenzraum in Fig. 6(A) zuordnen lässt. Wenn sich nun in dem zweidimensionalen Spektrum an diesem Ort 46' kein Peak finden lässt, so kann das Scheinziel 46 in Fig. 10 sofort verworfen werden. Auf entsprechende Weise lässt sich in dem hier gezeigten Beispiel auch ein weiteres Scheinziel 48 in Fig. 10 eliminieren, das dem Schnittpunkt der Geraden 32a mit der Geraden 30b entspricht. Diesem Scheinziel entspricht in Fig. 6(B) ein Ort 48', an dem ebenfalls kein signifikanter Peak zu finden ist.

## Patentansprüche

1. Verfahren zur Ortung von Objekten (12, 14) mit einem FMCW-Radar, bei dem:

   - ein rampenförmig frequenzmoduliertes Radarsignal gesendet wird, dessen Modulationsmuster mehrere aufeinander folgende Rampen (24, 26, 28) mit unterschiedlicher Steigung; und mehrere unmittelbar aufeinander folgende Rampen (24) mit gleicher Steigung aufweist,
   - empfangene Radarechos mit dem gesendeten Signal in ein Basisband herunter gemischt werden,
   - das Basisbandsignal Rampe für Rampe aufgezeichnet und in ein jeweiliges Spektrum transformiert wird,
   - das Basisbandsignal für jede der Schar aufeinander folgenden Rampen (24) mit gleicher Steigung in ein Spektrum in einem zweidimensionalen Frequenzraum transformiert wird, in dem eine erste Frequenzvariable $f_k$ einen Abtastindex k innerhalb jeder Rampe repräsentiert und die zweite Frequenzvariable $f_j$ einen Rampenindex j repräsentiert,
   - für jeden im Spektrum aufgefundenen Signalpeak (30, 32) eine Rausch-Schätzung in beiden Dimensionen des Frequenzraumes zur Unterscheidung zwischen Radarzielen und Rauschen oder Clutter (34) vorgenommen wird,
   **dadurch gekennzeichnet, dass**
   - die Bestimmung der Abstände R und Relativgeschwindigkeiten v durch Vergleich der Frequenzlagen der einander entsprechenden Signalpeaks in den für verschiedene Rampensteigungen erhaltenen Spektren allein auf der Basis der ersten Frequenzvariablen $f_k$ erfolgt.

2. Verfahren nach Anspruch 1, bei dem die Rausch-Schätzung eine zweidimensionale CFAR-Schätzung ist.

3. Verfahren nach Anspruch 2, bei dem die Rausch-Schätzung eine OS-CFAR-Schätzung ist.

4. Verfahren nach einem der vorstehenden Ansprüche, bei dem eine Trennung nahe beieinander liegender Signalpeaks (30, 32) anhand der Lage dieser Signalpeaks in dem zweidimensionalen Frequenzraum erfolgt.

5. Verfahren nach einem der vorstehenden Ansprüche, bei dem die Basisbandsignale für die aufeinander folgenden Rampen (24) mit gleicher Steigung mit einer Fensterfunktion (40) gefiltert werden, die eine nicht konstante Funktion des Rampenindex j ist.

6. Verfahren nach Anspruch 5, für einen Radarsensor in einem Kraftfahrzeug, bei dem die Fensterfunktion (40) in Abhängigkeit von der Eigengeschwindigkeit des Kraftfahrzeugs variiert wird.

**7.** Verfahren nach einem der vorstehenden Ansprüche, bei dem für die Bestimmung der Abstände R und Relativgeschwindigkeiten v auf der Basis der ersten Frequenzvariablen $f_k$ die auf Scharen von Rampen (24, 26, 28) mit unterschiedlicher Steigung gefundenen Signalpeaks einander zugeordnet werden und zur Identifizierung von durch Fehlzuordnungen entstehenden Scheinzielen (46, 48) die diesen Scheinzielen entsprechenden Orte (46', 48') in dem zweidimensionalen Spektrum überprüft werden.

**8.** FMCW-Radarsensor mit einer Steuer- und Auswerteeinrichtung (22), in der ein Verfahren nach einem der Ansprüche 1 bis 7 implementiert ist.

**Claims**

**1.** Method for locating objects (12, 14) using an FMCW radar, in which:

- a radar signal which is frequency-modulated in the form of ramps is transmitted, the modulation pattern of which signal has a plurality of successive ramps (24, 26, 28) with a different gradient and a plurality of immediately successive ramps (24) with the same gradient,
- received radar echoes are down-mixed to a baseband with the transmitted signal,
- the baseband signal is recorded ramp by ramp and is transformed into a respective spectrum,
- the baseband signal for each of the multitude of successive ramps (24) with the same gradient is transformed into a spectrum in a two-dimensional frequency space in which a first frequency variable $f_k$ represents a sampling index k within each ramp and the second frequency variable $f_j$ represents a ramp index j,
- for each signal peak (30, 32) found in the spectrum, a noise estimation is carried out in both dimensions of the frequency space in order to distinguish between radar targets and noise or clutter (34),
**characterized in that**
- the distances R and relative speeds v are determined by comparing the frequency positions of the mutually corresponding signal peaks in the spectra obtained for different ramp gradients solely on the basis of the first frequency variable $f_k$.

**2.** Method according to Claim 1, in which the noise estimation is a two-dimensional CFAR estimation.

**3.** Method according to Claim 2, in which the noise estimation is an OS-CFAR estimation.

**4.** Method according to one of the preceding claims, in which signal peaks (30, 32) which are close together are separated on the basis of the position of these signal peaks in the two-dimensional frequency space.

**5.** Method according to one of the preceding claims, in which the baseband signals for the successive ramps (24) with the same gradient are filtered using a window function (40) which is a non-constant function of the ramp index j.

**6.** Method according to Claim 5 for a radar sensor in a motor vehicle, in which the window function (40) is varied on the basis of the motor vehicle's own speed.

**7.** Method according to one of the preceding claims, in which, in order to determine the distances R and relative speeds v on the basis of the first frequency variable $f_k$, the signal peaks found in multitudes of ramps (24, 26, 28) with a different gradient are assigned to one another and, in order to identify decoys (46, 48) produced by misassignments, the locations (46', 48') corresponding to these decoys in the two-dimensional spectrum are checked.

**8.** FMCW radar sensor having a control and evaluation device (22) in which a method according to one of Claims 1 to 7 is implemented.

**Revendications**

**1.** Procédé de localisation d'objets (12, 14) au moyen d'un radar FMCW, dans lequel :

- un signal radar modulé en fréquence en forme de rampe est envoyé dont le profil de modulation présente plusieurs rampes consécutives (24, 26, 28) ayant des pentes différentes et plusieurs rampes directement consécutives (24) ayant des pentes identiques,

- des échos radar reçus sont sous-mixés avec le signal envoyé en une bande de base,
- le signal de bande de base est enregistré rampe par rampe et transformé en un spectre respectif,
- le signal de bande de base pour chacune de l'ensemble de rampes consécutives (24) ayant des pentes identiques est transformé en un spectre dans un espace de fréquence bidimensionnel dans lequel une première variable de fréquence $f_k$ représente un indice de balayage k à l'intérieur de chaque rampe et la deuxième variable de fréquence $f_j$ représente un indice de rampe j,
- pour chaque pic de signal (30, 32) trouvé dans le spectre, une estimation de bruit est effectuée dans les deux dimensions de l'espace de fréquence pour distinguer des cibles radars du bruit ou des échos parasites (34),
**caractérisé en ce que**
- la détermination des distances R et des vitesses relatives v est effectuée par une comparaison des positions de fréquence des pics de signal qui se correspondent mutuellement dans les spectres obtenus pour différentes pentes de rampe uniquement sur la base des premières variables de fréquence $f_k$.

2. Procédé selon la revendication 1, dans lequel l'estimation de bruit est une estimation CFAR bidimensionnelle.

3. Procédé selon la revendication 2, dans lequel l'estimation de bruit est une estimation OS-CFAR.

4. Procédé selon l'une quelconque des revendications précédentes, dans lequel une séparation de pics de signal (30, 32) rapprochés est effectuée à l'aide de la position de ces pics de signal dans l'espace de fréquence bidimensionnel.

5. Procédé selon l'une quelconque des revendications précédentes, dans lequel les signaux de bande de base pour les rampes consécutives (24) ayant des pentes identiques sont filtrés par une fonction de fenêtre (40) qui est une fonction non constante de l'indice de rampe j.

6. Procédé selon la revendication 5, pour un capteur de radar dans un véhicule automobile pour lequel la fonction de fenêtre (40) est variée en fonction de la vitesse propre du véhicule automobile.

7. Procédé selon l'une quelconque des revendications précédentes, dans lequel, pour la détermination des distances R et les vitesses relatives v sur la base de la première variable de fréquence $f_k$, les pics de signal trouvés sur des ensembles de rampes (24, 26, 28) ayant des pentes différentes sont associés les uns aux autres, et pour l'identification des cibles fictives (46, 48) créées par des associations erronées, les emplacements (46', 48') correspondant à ces cibles fictives sont vérifiés dans le spectre bidimensionnel.

8. Capteur radar FMCW muni d'un dispositif de commande et d'évaluation (22) dans lequel le procédé selon l'une quelconque des revendications 1 à 7 est mis en œuvre.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- US 2012235854 A1
- DE 102009000468 A1